# EUROPEAN PATENT APPLICATION

(11) **EP 4 622 075 A1**
(43) Date of publication of application: **24.09.2025**
(21) Application number: 23890781.0
(22) Date of filing: 14.11.2023
(51) Int. Cl.: H02K 11/215, H02K 1/2733

(54) **BRUSHLESS MOTOR AND BRUSHLESS MOTOR ROTOR POSITION DETECTION METHOD**

(30) Priority: 15.11.2022 CN 202211428875
(71) Applicant: Guangdong Zhaoqing L & V Co., Ltd., Zhaoqing, Guangdong 526238 (CN)
(72) Inventor: XIE, Xiaowu, Zhaoqing, Guangdong 526238 (CN); CHEN, Liang, Zhaoqing, Guangdong 526238 (CN); ZHANG, Hongliang, Zhaoqing, Guangdong 526238 (CN); JIANG, Yuan, Zhaoqing, Guangdong 526238 (CN)
(74) Representative: Kraus & Lederer PartGmbB
(86) International application number: PCT/CN2023/131563
(87) International publication number: WO 2024/104348

(57) **Abstract**

The present invention discloses a brushless motor and a method for detecting a position of a rotor in the brushless motor, wherein the Hall sensor is arranged facing an axial end face of the rotor assembly, and a portion of the rotor permanent magnet serves to provide magnetic flux to the Hall sensor. Replacing the conventional two magnets (a Hall sensor magnet and a rotor permanent magnet), the rotor permanent magnet itself is used as a Hall sensor magnet to provide magnetic flux to the Hall sensor, which makes it unnecessary to perform unified magnetization of the Hall sensor magnet and the rotor permanent magnet and to adjust relative positions of the two magnets. This reduces process complexity, greatly improves the consistency of magnetic flux of the rotor magnet, and accordingly enhances the accuracy and precision of rotor position detection. In addition, since only one magnet needs to be installed, the installation process is very easy.

## Description

### Technical Field

The present invention relates to the field of brushless motors, in particular to a brushless motor and a method for detecting a position of a rotor in a brushless motor.

### Background Art

A brushless motor mainly includes three parts: a stator assembly, a rotor assembly, and a controller. The stator assembly includes a stator core and a stator winding. The stator core is typically made by stacking silicon steel sheets, with slots on its inner circular surface for arranging a stator winding. The rotor assembly of the brushless motor includes a rotor core and a permanent magnet mounted thereon.

After the stator winding of the brushless motor is energized, a current in a winding coil will generate a magnetic field. The magnetic field will interact with the rotor permanent magnet, driving the rotor to rotate. In simple terms, the rotor permanent magnet has a moving tendency to align its internal magnetic field lines with external magnetic field lines in direction, that is, pole N of the rotor permanent magnet tends to move in alignment with pole S of the energized winding, and pole S of the rotor permanent magnet tends to move in alignment with pole N of the energized winding. In this way, a rotational torque is formed on the rotor, causing the rotor to rotate under an action of the rotational torque.

To ensure continuous rotation of the rotor, it is necessary to constantly adjust directions of the magnetic field of the stator winding based on a current position of the rotor. According to a position of the rotor pole relative to the stator winding, energizing coils of the stator winding in a certain sequence can produce a rotating magnetic field, thereby driving the rotor to rotate continuously. The position of the rotor is usually detected by a position sensor that detects the position of the rotor pole relative to the stator winding and generates a position sensing signal at a determined position. The signal, after conversion, is used to control the current switching of the stator winding. As can be seen, the key to controlling a brushless motor lies in detecting the rotor position and obtaining commutation points of the brushless motor based on positional information of the rotor.

Currently, common methods for detecting the rotor position include Hall sensor detection and sensorless detection. Sensors utilizing Hall Effect are called Hall sensors. When a current passes through a semiconductor perpendicularly to the external magnetic field, carriers will deflect, creating an additional electric field in a direction perpendicular to the current and the magnetic field, leading to a potential difference across both ends of the semiconductor. The potential difference is called "Hall voltage", and this phenomenon is called "Hall effect". Hall voltage varies with the magnetic field strength; the stronger the magnetic field is, the higher the voltage is, and vice versa. Since the rotor of the brushless motor is a permanent magnet, as long as a Hall sensor is installed at an appropriate position, a change in the magnetic field strength of the rotor can be seen from the variation of the Hall voltage, and thereby the rotational position of the rotor can be obtained.

For the existing brushless motors, the rotor permanent magnet and stator core are designed to have the same height or axial dimension, and an additional magnet is added to the rotor, serving as a Hall sensor magnet to provide magnetic flux for the Hall sensor. This method and structure have the following drawbacks: there is an angular deviation between the main magnetic flux of the rotor permanent magnet and the magnetic flux provided by the magnet for the Hall sensor, which will reduce the accuracy and precision of the rotor position detection. In addition, adding an extra magnet to the rotor will increase the complexity of assembly process of the motor. To eliminate the deviation in terms of mounting angles of the two magnets, the two magnets are magnetized simultaneously, or they are magnetized separately, followed by angle compensation and calibration through electronic technology. This, however, will affect the operability of motor assembly and increase the process complexity.

Therefore, it is necessary to develop a brushless motor and a method for detecting a position of a rotor in the brushless motor that feature simple process, convenient operation and high position detection accuracy.

### Summary of the Invention

In order to solve the above problem, the present invention provides a brushless motor and a method for detecting a position of a rotor in the brushless motor, which not only reduces the complexity of magnetizing and installation processes, but also improves the magnetic flux consistency of the rotor permanent magnet and the accuracy and precision of the rotor position detection.

The objective of the present invention is achieved by the following technical solution: A brushless motor, comprising a rotor assembly, a stator assembly, and a Hall sensor, wherein the rotor assembly comprises a rotor core and a permanent magnet disposed on said rotor core, the stator assembly comprises a stator core and a stator winding, and the Hall sensor is arranged facing an axial end face of the rotor assembly, characterized in that a portion of the permanent magnet serves to provide magnetic flux to the Hall sensor.

According to one aspect of the present invention, an axial dimension of the permanent magnet is greater than axial dimensions of the stator core and the rotor core, with an excess portion serving to provide magnetic flux to the Hall sensor.

According to one aspect of the present invention, the excess portion is 2-8 mm in dimension.

According to one aspect of the present invention, the axial dimension of the rotor core is identical with the axial dimension of the stator core.

According to one aspect of the present invention, the permanent magnet is a circular magnetic ring. Alternatively, it may be otherwise conventionally arranged as a magnetic sheet, a magnet attached to a surface, an embedded magnet, a built-in magnet, etc.

According to one aspect of the present invention, the permanent magnet is magnetized radially, and magnetic flux leakage at 2 mm from an axial end face of the permanent magnet is not less than 200 Gauss.

According to one aspect of the present invention, the brushless motor is a three-phase brushless DC motor with an inner rotor structure.

According to one aspect of the present invention, the brushless motor comprises a printed circuit board (PCB) on which the Hall sensor is mounted.

According to one aspect of the present invention, an axial end face of the excess portion is 1-2.5 mm from the Hall sensor.

According to one aspect of the present invention, the stator core is circular in shape, with an outer diameter of 20-60 mm and an inner diameter of 10-50 mm.

According to one aspect of the present invention, the stator core is in the shape of a hexagon, whose opposite sides are 20-60 mm and whose inner diameter is 10-50 mm.

In the brushless motor of the present invention, the rotor permanent magnet itself is used as a Hall sensor magnet in place of the conventionally additionally added one to provide magnetic flux to the Hall sensor, which makes it unnecessary to perform unified magnetization of the Hall sensor magnet and the rotor permanent magnet and to adjust the relative positions of the two magnets. This reduces process complexity, makes the consistency of magnetic flux of the rotor permanent magnet significantly better than that of two magnets, and thereby enhances the accuracy and precision of rotor position detection. In addition, since only one magnet needs to be installed, the installation process is very easy.

The present invention also discloses a method for detecting a position of a rotor in a brushless motor, said brushless motor comprising a rotor assembly, a stator assembly, and a Hall sensor, wherein the rotor assembly comprises a rotor core and a permanent magnet disposed on said rotor core, the stator assembly comprises a stator core and a stator winding, characterized in that the method comprises: arranging the Hall sensor to face an axial end face of the rotor assembly; using a portion of the permanent magnet for providing magnetic flux to the Hall sensor.

According to one aspect of the present invention, an axial dimension of the permanent magnet is set to be greater than axial dimensions of the stator core and the rotor core, with an excess portion serving to provide magnetic flux to the Hall sensor.

According to one aspect of the present invention, the excess portion is 2-8 mm in dimension.

According to one aspect of the present invention, the axial dimension of the rotor core is identical with the axial dimension of the stator core.

According to one aspect of the present invention, the permanent magnet is a circular magnetic ring. Alternatively, it may be otherwise conventionally arranged as a magnetic sheet, a magnet attached to a surface, an embedded magnet, a built-in magnet, etc.

According to one aspect of the present invention, the permanent magnet is magnetized radially, and magnetic flux leakage at 2 mm from an axial end face of the permanent magnet is not less than 200 Gauss.

In the method for detecting a position of a rotor in a brushless motor according to the present invention, the rotor permanent magnet itself is used as a Hall sensor magnet in place of the conventionally additionally added one to provide magnetic flux to the Hall sensor, which makes it unnecessary to perform unified magnetization of the Hall sensor magnet and the rotor permanent magnet and to adjust the relative positions of the two magnets. This reduces process complexity, makes the consistency of magnetic flux of the rotor permanent magnet significantly better than that of two magnets, and thereby enhances the accuracy and precision of rotor position detection.

### Brief Description of the Drawings

Fig. 1 is a schematic diagram of a rotor structure and a rotor position detection mode of a brushless motor in the prior art;
Fig. 2 is a schematic diagram of a rotor structure and a rotor position detection mode of a brushless motor according to an embodiment of the present invention;
Fig. 3 is an end face view of a rotor magnetic ring in Fig. 2;
Fig. 4 is a schematic diagram showing a relationship between an axial dimension of a rotor core and that of a stator core of a brushless motor according to an embodiment of the present invention;
Fig. 5 is an end face view of a stator core of a brushless motor according to an embodiment of the present invention;
Fig. 6 is an end face view of a stator core of a brushless motor according to another embodiment of the present invention.

### Detailed Description of the Embodiments

The brushless motor and the method for detecting a position of a rotor in a brushless motor in the present application are described in detail below with reference to the drawings. The drawings illustrate embodiments of the present application by way of example.

In the following description, numerous specific details are set forth in order to make technical users in the art fully understand the present invention. However, it will be apparent to the technical users in the art that the present invention may be implemented without some of these specific details. Furthermore, it will be appreciated that the present invention is not limited to the specific embodiments described herein. On the contrary, any combination of features and elements described below can be used to implement the present invention, regardless of whether they relate to different embodiments. Therefore, the following aspects, features, embodiments and advantages are for illustration only, and should not be regarded as elements or limitations of the claims, unless explicitly stated in the claims.

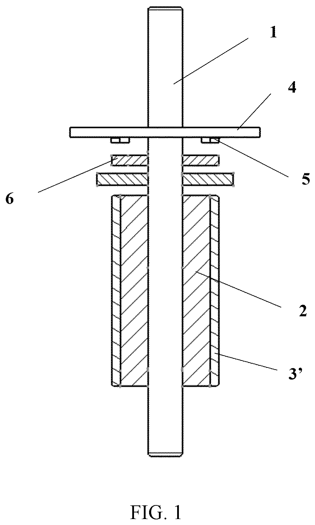

See Fig. 1, which is a schematic diagram of a rotor structure and a rotor position detection mode of a brushless motor in the prior art. A rotor assembly comprises a rotor shaft 1, a rotor core 2 arranged on the rotor shaft 1, and a rotor permanent magnet 3'. A Hall sensor 5 is arranged on a printed circuit board 4, facing an axial end face of the rotor assembly. In order to provide the Hall sensor 5 with magnetic flux for detecting a current position of the rotor, a permanent magnet is additionally arranged on the rotor shaft 1 as a Hall sensor magnet 6 for providing magnetic flux to the Hall sensor 5. A separator usually made of stainless steel is provided between the rotor permanent magnet 3' and the Hall sensor magnet 6 to eliminate mutual influence between magnetic fields of end faces of two magnets.

There is an angular deviation between the main magnetic flux of the rotor permanent magnet 3' and the magnetic flux provided by the Hall sensor magnet 6 for the Hall sensor 5, which will reduce the accuracy and precision of the rotor position detection. To eliminate the deviation in terms of mounting angles of the two magnets, the two magnets are magnetized simultaneously, or they are magnetized separately, followed by angle compensation and calibration through electronic technology. This, however, will affect the operability of motor assembly and increase the process complexity. In addition, adding a magnet and separator on the rotor will add to the complexity of the assembly process of the motor.

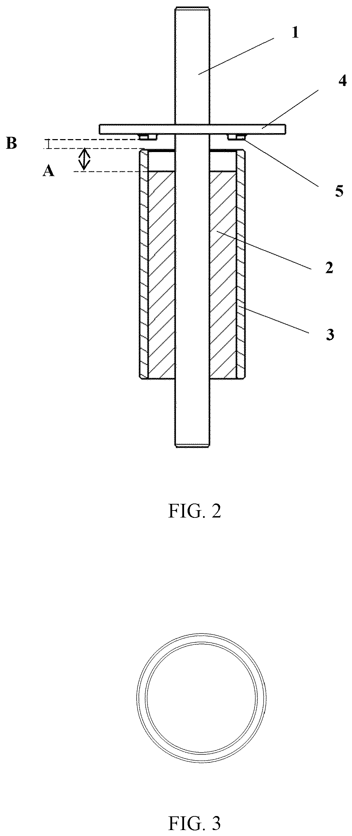

The brushless motor of the present invention can well solve the above problem. See Fig. 2, which is a schematic diagram showing a rotor structure and a rotor position detection mode of a brushless motor according to an embodiment of the present invention, wherein the rotor assembly comprises a rotor shaft 1, a rotor core 2 arranged on the rotor shaft 1, and a rotor permanent magnet 3.

As a specific embodiment, the rotor permanent magnet 3 is a magnetic ring arranged on an outer circumferential surface of the rotor core 2 and surrounding the rotor core 2. The rotor magnetic ring is generally circular, with an outer diameter of 10-40mm and an inner diameter of 8-38mm. The material of the rotor magnetic ring is generally bonded NdFeB, and the thickness of the magnetic ring is generally 1-4 mm. Fig. 3 is an end face view of the rotor permanent magnet 3. In addition to a circular magnetic ring, the rotor permanent magnet 3 can also be conventionally arranged as a magnetic sheet, a magnet attached to a surface, an embedded magnet, a built-in magnet, etc.

The Hall sensor 5 is arranged on the printed circuit board 4, facing the axial end face of the rotor permanent magnet 3. In order to provide the Hall sensor 5 with magnetic flux for detecting the current position of the rotor, the rotor permanent magnet 3 is designed to have an axial dimension greater than those of the rotor core 2 and the stator core, with an excess portion A replacing the Hall sensor magnet 6 in the prior art to provide the Hall sensor 5 with magnetic flux for detecting the current position of the rotor. With the Hall sensor magnet 6 omitted, unified magnetization will not be performed and relative positions of the two magnets will not be adjusted any more, making the process less complex than before. In addition, the magnetic flux consistency of the rotor permanent magnet 3 is better than that of the two magnets, leading to a higher accuracy of rotor position detection. Since only one permanent magnet needs to be installed, the installation process is simplified.

As a specific embodiment, the excess portion A is 2-8 mm in dimension. A distance B from the axial end face of the excess portion A to the Hall sensor 5 is 1-2.5 mm. Those skilled in the art know that the dimension of the excess portion A and the distance B from the excess portion A to the Hall sensor 5 that meet the detection requirements can be set according to the dimension of the brushless motor and the magnetizing amount of the rotor permanent magnet 3.

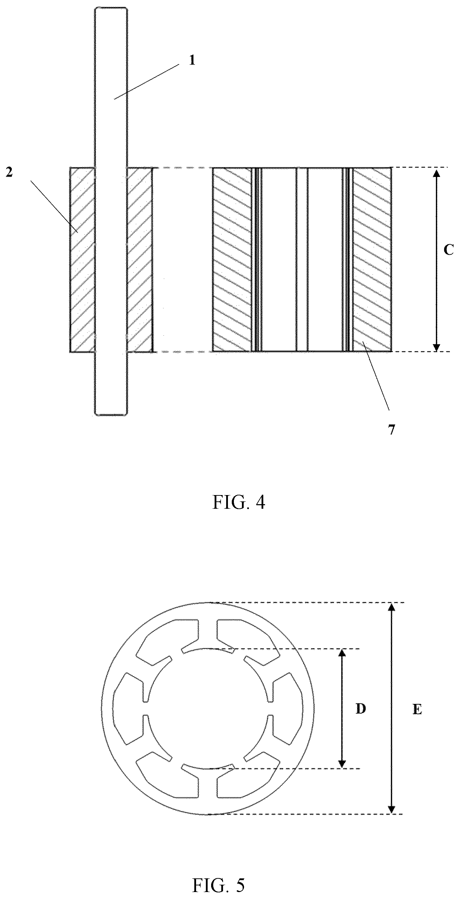

See Fig. 4, which is a schematic diagram showing a relationship between an axial dimension of a rotor core and that of a stator core of a brushless motor according to an embodiment of the present invention. As a specific embodiment, the axial dimension of the rotor core 2 is identical with the axial dimension C of the stator core 7.

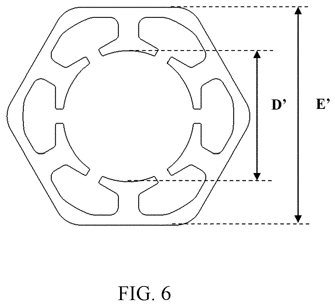

See Figs. 5 and 6, which show two alternatives of stator core of the brushless motor according to an embodiment of the present invention. As shown in Fig. 5, the stator core lamination is circular in shape, with an outer diameter dimension E of 20-60mm and an inner diameter dimension D of 10-50mm. As shown in Fig. 6, the stator core lamination is in the shape of a hexagon, whose opposite side dimension E' is 20-60 mm and whose inner diameter dimension D' is 10-50 mm.

As a specific embodiment, the permanent magnet 3 is magnetized radially, and magnetic flux leakage at 2 mm from the axial end face 2 of the permanent magnet 3 is not less than 200 Gauss.

As a specific embodiment, the brushless motor is a three-phase brushless DC motor with an inner rotor structure.

Based on the same principle, the present invention also provides a method for detecting a position of a rotor in a brushless motor, and its implementation principle is similar to that of the brushless motor. For the details, please refer to the description of the brushless motor.

Referring to Figs. 2 to 6, in the method for detecting a position of a rotor in a brushless motor according to the present invention, the brushless motor comprises a rotor assembly, a stator assembly and a Hall sensor 5, wherein the rotor assembly comprises a rotor core 2 and a permanent magnet 3 arranged on the rotor core 2, and the stator assembly comprises a stator core 7 and a stator winding (not shown in the figure). The method comprises: arranging the Hall sensor 5 facing the axial end face of the rotor assembly; using a portion of the permanent magnet 3 for providing magnetic flux to the Hall sensor 5. As a specific embodiment, the Hall sensor 5 is arranged on the printed circuit board 4, facing the axial end face of the rotor permanent magnet 3, and the rotor position is detected by using the magnetic flux leakage at the axial end face of the rotor permanent magnet 3.

As a specific embodiment, the axial dimension of the rotor permanent magnet 3 is set to be greater than axial dimensions of the rotor core 2 and the stator core, and the excess portion A replaces the Hall sensor magnet 6 in the prior art to provide the Hall sensor 5 with magnetic flux for detecting the current position of the rotor.

As a specific embodiment, the excess portion A is 2-8 mm in dimension.

As a specific embodiment, the axial dimension of the rotor core 2 is identical with the axial dimension C of the stator core 7.

As a specific embodiment, the rotor permanent magnet 3 is a circular magnetic ring. Alternatively, it may be otherwise conventionally arranged as a magnetic sheet, a magnet attached to a surface, an embedded magnet, a built-in magnet, etc. The material of the rotor magnetic ring is generally bonded NdFeB, and the thickness of the magnetic ring is generally 1-4 mm. The stator core lamination may be circular in shape, with an outer diameter dimension E of 20-60mm and an inner diameter dimension D of 10-50mm. The stator core lamination may also be in the shape of a hexagon, whose opposite side dimension E' is 20-60 mm and whose inner diameter dimension D' is 10-50 mm.

As a specific embodiment, the permanent magnet 3 is magnetized radially, and magnetic flux leakage at 2 mm from the axial end face 2 of the permanent magnet 3 is not less than 200 Gauss.

As a specific embodiment, the brushless motor is a three-phase brushless DC motor with an inner rotor structure.

In the brushless motor and the method for detecting a position of a rotor in a brushless motor according to the present application, the rotor permanent magnet itself is used as a Hall sensor magnet in place of the conventional two magnets (a Hall sensor magnet and a rotor permanent magnet) to provide magnetic flux to the Hall sensor, which makes it unnecessary to perform unified magnetization of the Hall sensor magnet and the rotor permanent magnet and to adjust the relative positions of the two magnets. This reduces process complexity, makes the consistency of magnetic flux of the rotor permanent magnet significantly better than that of two magnetic rings, and thereby enhances the accuracy and precision of rotor position detection. In addition, since only one magnet needs to be installed, the installation process is very easy.

While preferred embodiments of the present invention are disclosed above, the present invention is not limited thereto. Various alterations and modifications made by any technical user in the art without departing from the spirit and scope of the present invention shall fall within the protection scope of the present invention. The protection scope of the present invention shall be determined by the scope defined by the claims.

## Claims

1. A brushless motor, comprising a rotor assembly, a stator assembly, and a Hall sensor, wherein the rotor assembly comprises a rotor core and a permanent magnet disposed on said rotor core, the stator assembly comprises a stator core and a stator winding, and the Hall sensor is arranged facing an axial end face of the rotor assembly, **characterized in that** a portion of the permanent magnet serves to provide magnetic flux to the Hall sensor.

2. The brushless motor according to claim 1, **characterized in that** an axial dimension of the permanent magnet is greater than axial dimensions of the stator core and the rotor core, with an excess portion serving to provide magnetic flux to the Hall sensor.

3. The brushless motor according to claim 2, **characterized in that** the excess portion is 2-8 mm in dimension.

4. The brushless motor according to any one of claims 1 to 3, **characterized in that** the axial dimension of the rotor core is identical with the axial dimension of the stator core.

5. The brushless motor according to any one of claims 1 to 3, **characterized in that** the permanent magnet is a circular magnetic ring.

6. The brushless motor according to any one of claims 1 to 3, **characterized in that** the permanent magnet is magnetized radially, and magnetic flux leakage at 2 mm from an axial end face of the permanent magnet is not less than 200 Gauss.

7. The brushless motor according to any one of claims 1 to 3, **characterized in that** it is a three-phase brushless DC motor with an inner rotor structure.

8. The brushless motor according to any one of claims 1 to 3, **characterized in that** it comprises a printed circuit board (PCB) on which the Hall sensor is mounted.

9. The brushless motor according to any one of claims 2 to 3, **characterized in that** an axial end face of the excess portion is 1-2.5 mm from the Hall sensor.

10. The brushless motor according to any one of claims 1 to 3, **characterized in that** the stator core is either circular or hexagonal.

11. A method for detecting a position of a rotor in a brushless motor, said brushless motor comprising a rotor assembly, a stator assembly, and a Hall sensor, wherein the rotor assembly comprises a rotor core and a permanent magnet disposed on said rotor core, the stator assembly comprises a stator core and a stator winding, **characterized in that** the method comprises:
arranging the Hall sensor to face an axial end face of the rotor assembly;
using a portion of the permanent magnet for providing magnetic flux to the Hall sensor.

12. The method for detecting a position of a rotor in a brushless motor according to claim 11, **characterized in that** an axial dimension of the permanent magnet is set to be greater than axial dimensions of the stator core and the rotor core, with an excess portion serving to provide magnetic flux to the Hall sensor.

13. The method for detecting a position of a rotor in a brushless motor according to claim 12, **characterized in that** the excess portion is 2-8 mm in dimension.

14. The method for detecting a position of a rotor in a brushless motor according to any one of claims 11 to 13, **characterized in that** the axial dimension of the rotor core is identical with the axial dimension of the stator core.

15. The method for detecting a position of a rotor in a brushless motor according to any one of claims 11 to 13, **characterized in that** the permanent magnet is a circular magnetic ring.

16. The method for detecting a position of a rotor in a brushless motor according to any one of claims 11 to 13, **characterized in that** the permanent magnet is magnetized radially, and magnetic flux leakage at 2 mm from an axial end face of the permanent magnet is not less than 200 Gauss.
